# EUROPÄISCHE PATENTSCHRIFT

(11) **EP 1 493 553 B1**
(45) Veröffentlichungstag und Bekanntmachung des Hinweises auf die Patenterteilung: **26.04.2006**
(21) Anmeldenummer: 04013262.3
(22) Anmeldetag: 04.06.2004
(51) Int. Cl.: B32B 5/00, B60R 16/02, H01B 7/24, H02G 3/04

(54) **Schutzvorrichtung für längliche Körper**
Protection device for elongated objects
Dispositif de protection pour des objets allongés

(30) Priorität: 02.07.2003 DE 10329857
(43) Veröffentlichungstag der Anmeldung: 05.01.2005
(73) Patentinhaber: FFA Automotive AG, 9445 Rebstein (CH)
(72) Erfinder: Lindner, Michael, 83026 Rosenheim (DE)
(74) Vertreter: nospat Patentanwälte

(56) Entgegenhaltungen:
- WO-A-01/84685
- US-A- 5 048 441
- US-A- 6 015 954

## Beschreibung

Die Erfindung betrifft eine Schutzvorrichtung für längliche Körper, insbesondere für Kabel oder dergleichen langgestreckte Gegenstände wie Kraftstoffleitungen, Hydraulikschläuche, Kabelbäume und Ähnliches.

Aus der EP 1 258 346 A2 ist eine Schutzummantelung für langgestreckte biegsame Gegenstände, insbesondere Kabel mit einem mehrschichtigen Aufbau aus zumindest zwei miteinander verbundenen Vliesen bekannt. Die Vliese können hierbei die unterschiedlichsten Vliese wie Quervliese, Kreuzvliese, Wirrvliese, Malivliese oder ähnliche Vliese sein. Die Vliese sind beispielsweise aus Polyester, Viskose oder Polypropylen hergestellt, wobei diese Kombination aus zwei Vliesen einen besonders guten Abriebschutz gewährleisten soll. Ähnliche Vliese sind auch aus der EP 1 258 346 A2 bekannt. Derartige Vliese haben sich in ihren Anwendungsbereichen bewährt.

Aus der WO 01/84685 A1 ist eine Wärmeschutzvorrichtung für von Außen zonal wärmebeaufschlagte, langgestreckte Körper, z.B. für Leitungen in einem Kraftfahrzeug bekannt, wobei die Wärmeschutzvorrichtung zumindest eine erste innere, dem Körper zugewandte, wärmebeständige Schutzschicht sowie ein die zonal auftretende Wärme ableitendes und großflächig verteilendes Mittel bekannt ist. Diese Wärmeschutzvorrichtung ist insbesondere dreischichtig aufgebaut, wobei ein Kevlarschlauch zwischen dem zu schützenden Objekt und der ersten inneren, dem Körper zugewandten, wärmebeständigen Schutzschicht angeordnet sein kann und eine weitere Schutzschicht gebildet ist, die vorzugsweise anliegend die erste Schutzschicht 4 umgibt, wobei die zweite Schutzschicht aus einem Drahtmaschengebilde ausgebildet sein kann.

Es ist ferner allgemein bekannt, beispielsweise im Kraftwagenbau längliche Körper, z.B. Hydraulik- oder Pneumatikleitungen bzw. Pneumatikschläuche oder Kabelbäume zum Schutz vor mechanischen Einflüssen, insbesondere zum Schutz vor Abrieb und gegen Scheuem mit Kunststoffwellrohren zu ummanteln. Übliche Wellrohre bestehen beispielsweise aus Polypropylen oder Polyamid und weisen eine nur begrenzte thermische Belastbarkeit auf, sodass elektrische Leitungen, Schläuche oder dergleichen, welche beispielsweise in Fahrzeugen in der Nähe von Wärmequellen, z. B. in der Nähe von Turboladern, Abgasanlagen oder dergleichen verlegt sind, durch solche Wellrohre nicht ausreichend vor Wärme geschützt sind. Ferner ist es bekannt Hochtemperatur-feste Wellrohre aus PTFE herzustellen oder die Isolierungen der Leiterdrähte Hochtemperatur-fest, z. B. aus einem Silikon oder PTFE-Material auszubilden. Ferner ist es bekannt, in stark Temperatur-beaufschlagten Bereichen Abriebschutzvorrichtungen auch aus Glasseidenschläuchen auszubilden, diese sind jedoch nicht resistent gegen scheuernde Belastung.

Bei immer geringer werdenden Bauräumen in den Motorräumen von Kraftfahrzeugen sind die Belastungen der Schutzvorrichtungen z. T. sehr komplex (Wärme- und/oder Abrieb-und/oder Quetschung und/oder Scherung und/oder Klappern), dass ein Versagen nicht mehr ausgeschlossen werden kann. Ferner entsteht gerade bei weiter sich einengenden Räumen im Vorderbau eines Kraftfahrzeuges immer mehr das Problem, dass bei Unfällen und einer damit einhergehenden insbesondere starken Deformation des Vorderbaus alle Bestandteile, d. h. auch alle elektrischen, Treibstoff-, pneumatischen oder hydraulischen Leitungen gequetscht oder geschert werden. Eine Verlegung derart, dass solche Leitungen bei der Verformung nicht gefährdet werden, ist immer weniger möglich.

Bei solchen Unfällen mit entsprechend starker Deformation des Vorderbaus werden insbesondere elektrische Leitungen bzw. Kabel gequetscht, was zu einem Masseschluss im Bereich der Quetschung oder Scherung durch die defekte Isolierung führt. Die Folge hieraus ist häufig, insbesondere wenn bei der gleichen Deformation auch Kraftstoffleitungen beschädigt werden, ein Fahrzeugbrand durch Funkenbildung.

Für diesen Fall wurde bereits versucht, die Kabel möglichst stabil zu umhüllen. Diese steifen Schutzvorrichtungen oder Umhüllungen sind aber bei der Montage unerwünscht und führen oft zu einem Klappern und sind zudem meist nicht besonders Temperatur-fest. Es ist bekannt, dass Aramidfasern eine hervorragende Zug- und ausreichende Scherfestigkeit besitzen. Von Nachteil ist aber, dass diese Fasern nicht UV-beständig sind. Ferner sind Aramidfasern nur bis etwa 180° hitzebeständig. Aramidfasern lassen sich zwar stricken und flechten, derartige Schläuche sind aber nicht verrundbar und lassen sich so in vernünftiger Weise nicht montieren. Die hierzu unter Verwendung derartiger Fasern durchgeführten Versuche waren Fehlschläge.

Aufgabe der Erfindung ist es, eine Schutzvorrichtung mit einer hohe Scheuer- und Scherfestigkeit, mit einem guten Zeitstandsverhalten bei dauerhaft hohen Temperaturen und einer guten Montierbarkeit zu schaffen.

Die Aufgabe wird mit eine Schutzvorrichtung mit den Merkmalen des Anspruchs 1 gelöst.

Vorteilhafte Weiterbildungen sind in Unteransprüchen gekennzeichnet.

Die erfindungsgemäße Schutzvorrichtung besitzt einen dreischichtigen Aufbau. Die innerste am nächsten zu dem zu schützenden Objekt angeordnete Schutzschicht ist eine kombinierte Schicht aus Glasseiden- und Aramidfasern.

Die erfindungsgemäße erste innere Schicht ist zudem gemeinsam kreuzgeflochten, wobei erfindungsgemäß herausgefunden wurde, dass die Kreuzflechtung gegenüber der Ringflechtung oder Spiralflechtung eine besonders homogene Faserverteilung ergibt. Die zweite Schicht besteht aus einem Aramidfasergestrick oder einem Co-Gestrick aus Aramid- und Metallfasern, insbesondere Aluminium und/oder Kupferfasern. Die dritte Schicht besteht aus einem Metalldrahtgestrick oder einem Metalldraht- und Aramidfasergestrick, insbesondere dann, wenn die zweite Schicht ausschließlich aus Aramidfasern besteht.

Die erfindungsgemäße Kombination, bei der eine erste Schicht aus einer Co-Kreuzflechtung von Aramidfasern und Glasseidenfasern besteht und die zweite Schicht eine Strickschicht aus Aramidfasern ist, ergibt sowohl eine gute Wärmeableitung als auch einen hervorragenden Scher- und Quetschschutz. Offenbar stellt sich hier ein synergistischer Effekt ein, denn mit Aramidfasern alleine oder Glasseidenfasern alleine war bei gleichem Aufbau ein solcher starker Effekt nicht erreichbar.

Die Erfindung wird im Folgenden beispielhaft anhand einer Zeichnung erläutert. Es zeigen dabei:
- Fig. 1: stark schematisiert den erfindungsgemäßen dreischichtigen Aufbau einer Schutzvorrichtung;
- Fig. 2: einen vergrößerten stark schematisierten Querschnitt durch einen Teilbereich, der ersten dem Objekt zugewandten Schutzschicht.

Die erfindungsgemäße Schutzvorrichtung 1 zum Schutz eines zu schützenden Objektes 2 ist ein langgestreckter Schlauch, welcher radial dreischichtig mit einer ersten inneren Schicht 3, einen zweiten intermediären Schicht 4 und einer dritten äußeren Schicht 5 ausgebildet ist. Die Schutzvorrichtung 1 kann sich über das gesamte zu schützende Objekt erstrecken oder teilbereichsweise, insbesondere in Teilbereichen, in denen neben einer hohen Temperaturbelastung auch eine hohe Scherbelastung erwartet werden kann, angeordnet sein.

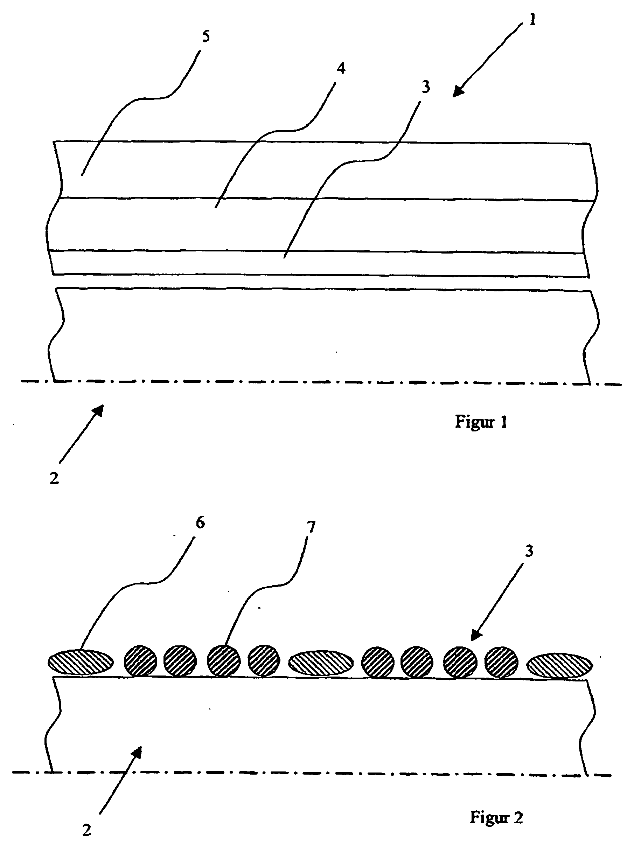

Die erste innere Schicht ist (Fig. 1 und 2) als geflochtener Schlauchkörper ausgebildet, wobei die Flechtstränge aus aus Glasfilamenten bestehenden Glasseidenfäden 6 und Aramidfilamenten bestehenden Aramidfäden 7 aufgebaut sind. Die Glasfilamente können aus einem E-Glas, aus einem D-Glas, einem R-Glas oder einem A-R-Glas, bevorzugt aus einem E-Glas, hergestellt sein. Vorzugsweise sind die Glasfilamente des Glasseidenfadens 6 aus einem E-Glas mit einer Dichte von beispielsweise ρ 2,6 g pro cm³ hergestellt. Derartige Glasfilamente haben einen Erweichungspunkt im Bereich zwischen etwa 770°C und 990°C und E-Glasfilamente insbesondere bei ca. 845°C. Eine Wärmebeständigkeit bei sonst unveränderten Materialeigenschaften besitzen derartige Glasfilamente bis etwa 350°C (D-Glas, R-Glas, A-R-Glas) sowie bis etwa 300°C (E-Glas) und wiesen bis zu Temperaturen von ca. 730°C (D-Glas, R-Glas, A-R-Glas) oder bis zu Temperaturen von ca. 600°D (E-Glas) keinen Verlust der Reißfestigkeitseigenschaften auf.

Derartige Glasfilamente besitzen eine relativ niedrige Wärmeleitfähigkeit λ von etwa 0,8 bis 1,2 W/mK, insbesondere 1,0 W/mK. Die Zugfestigkeit derartiger Glasseidenfasern 6 liegt bei etwa 2500 MPa bzw. 3400 MPa (E-Glas). Glasseide aus den genannten Glasfilamenten ist außerdem feuerbeständig und unbrennbar. Die Glasfilamente entsprechen beispielsweise einer Spezifikation 68 Dtex 2 (zwei gezwirnte Fäden mit je 34 Dtex).

Die Aramidfäden 7 bestehen aus einer Vielzahl von Aramidfilamenten, welche zu einem Multifilament miteinander verzwimt sind. Vorzugsweise handelt es sich um eine Niedrigverzwirnung. Die Aramidfilamente entsprechen beispielsweise einer Spezifikation Dtex 1610.

Die Glasseidenfäden 6 und die Aramidfäden 7 werden gemeinsam kreuzgeflochten. Bei der Kreuzflechtung ist von Vorteil, dass sich gegenüber der Rundflechtung oder Spiralflechtung eine sehr gute homogene Faserverteilung der co-geflochtenen Faserbestandteile Glas und Aramid ergibt. Der Aramidanteil in dem kreuz-co-geflochtenen Schlauch liegt dabei zwischen 10% und 50 %, vorzugsweise bei 20% bis 40 % und am meisten bevorzugt bei 30 %. Erfindungsgemäß wurde herausgefunden, dass bei einer Co-Kreuzflechtung nicht nur eine gute homogene Faserverteilung erreicht wird, derartige Schläuche lassen sich bis zu einem Anteil von maximal 50% Aramid auch noch verrunden.

Erfindungsgemäß wurde zudem herausgefunden, dass bei der Co-Kreuzflechtung der Aramidfäden bzw. -fasern 7 und der Glasseidenfäden bzw. -fasern die ursprünglich runden Fasern während des Co-Kreuzflechtens und während der Verrundungsbehandlung mit einer Imprägnierung die Fasern radial gequetscht werden und hierbei einen flacheren Querschnitt einnehmen. Hierdurch kann in vorteilhafter Weise die Schutzfläche und die Schutzwirkung deutlich vergrößert werden (Fig. 2).

Für eine Verrundung wird die erste innere Schicht 3 imprägniert oder gelackt, damit zwischen den Filamenten bzw. den Fäden ein mechanischer Verbund ausgebildet wird und somit der Schlauch eine dauerhafte, im Querschnitt rundliche Raumform erhält und diese bei der weiteren Be- oder Verarbeitung beibehält.

Als Imprägnierung für die erste Schicht eignen sich Imprägnierungen auf Basis von PTFE, Silikon oder Polyurethan, wobei die PTFE-Imprägnierung temperaturbeständig bis etwa 260°C, die Silikon-Imprägnierung temperaturbeständig bis etwa 220°C und die Polyurethan-Imprägnierung temperaturbeständig bis etwa 155°C ist. Vorteilhafterweise wird eine Imprägnierung aus einem Silikonharz gewählt, da erfindungsgemäß festgestellt werden konnte, dass die Silikonharz-Imprägnierung zu einer UV-Stabilisierung der Aramidfasern in dem cokreuzgeflochtenen Schlauch führt. Die Imprägnierung des Schlauchs bzw. ersten inneren Schicht erleichtert zudem die Handhabbarkeit des Schlauchs, da an einer endseitigen Schnittkante des Schlauchs die Fäden bzw. Filamente durch die Imprägnierung zusammengehalten werden und somit ein Ausfransen an den Enden des Schlauchs zuverlässig verhindert ist.

Die erste schlauchförmige Schicht 3 außenseitig, vorzugsweise anliegend umgebend, ist die zweite Schutzschicht 4 angeordnet.

Die zweite Schutzschicht 4 ist als Gestrickschicht aus gestrickten Filamenten ausgebildet. Das Gestrick besteht entweder aus Aramidfasern oder Aramidfasern und Metalldrahtfilamenten. Die Aramidfasern sind insbesondere ein Multifilament, welches ebenfalls verzwimt und insbesondere niedrigverzwirnt ist, wobei die Aramidfasern beispielsweise einer Spezifikation Dtex 1610 entsprechen. Die Metalldrahtfilamente werden aus Aluminium und/oder Kupfer und/oder Kupferlegierungen wie Messing, Tombak und dergleichen ausgebildet und können als Multifilament oder Monofilament mit einer Dicke von beispielsweise 0,08 mm bis 0,2 mm, vorzugsweise 0,11 mm bis 0,15 mm ausgebildet sein. Wenn dies gewünscht ist, können die Metalldrahtfilamente auch aus Monel (NiCu30Fe) und/oder einem Edelstahl ausgebildet sein. Bei der Co-Verstrickung können die Aramidfaser und der Draht mittels eines Rundstrickverfahrens eingängig spiralförmig umlaufend verstrickt sein, sodass Maschen ausgebildet werden. Die Maschen haben eine Maschenhöhe H, auch Maschenlänge genannt, im Bereich von 1,3 mm bis 3 mm, insbesondere 1,7 mm bis 2,3 mm und wiesen einen Maschenabstand, auch Maschenteilung genannt, von 1 mm bis 3 mm, insbesondere 1,4 mm bis 1,7 mm auf. Ferner ist es möglich, die zweite Schutzschicht aus einer Aramidfaser und einem Metalldraht zweigängig spiralförmig rund zu stricken, wobei jeweils die durch den Draht ausgebildeten Maschen unter Bildung von freien Maschen mittels des Drahtes verbunden sind, wobei die freien Maschen im darauffolgenden Umlauf in gleicher Weise vom Draht unter Bildung freier Maschen verbunden sind. Das zweigängige Verstricken hat den Vorteil, dass nach dem Abschneiden eines so gestrickten Schlauchkörpers im Gegensatz zum eingängig verstrickten Schlauchkörper ein unbeabsichtigtes Auftrennen von einer Schnittkante des Schlauchkörpers her verhindert ist.

Auch diese zweite Schutzschicht wird vorzugsweise mit einer Imprägnierung mit den vorgenannten Imprägnierungsmitteln versehen, vorzugsweise mit einer Silikonharz-Imprägnierung. Hierbei ist es möglich, zunächst die erste innere Schicht 3 zu imprägnieren und dann die zweite intermediäre Schicht zu imprägnieren oder um die erste Schicht die zweite Schicht herumzustricken und sie dann gemeinsam zu imprägnieren.

Die zweite intermediäre Schutzschicht anliegend umgebend, ist die dritte Schutzschicht 5 ausgebildet, welche ebenfalls als Gestrick ausgebildet ist. Das Gestrick der äußeren Schicht 5 kann ein Metalldrahtgestrick oder ein Co-Gestrick aus Metalldrahtfilamenten und Aramidfasern sein. Vorzugsweise wird, wenn die zweite Schicht ausschließlich aus einem Aramidfasergestrick besteht, die äußere Schicht 5 aus einem Co-Gestrick aus Metalldrahtfilamenten und Aramidfasern ausgebildet. Besteht die zweite intermediäre Schicht 4 aus einem Co-Gestrick aus Metalldrahtfilamenten und Aramidfasern, besteht die dritte äußere Schicht 5 vorzugsweise ausschließlich aus Metalldrahtfilamenten. Vorzugsweise wird der das Gestrick bildende Draht aus Monel (NiCu30Fe) und/oder aus einem Edelstahl, insbesondere einem Edelstahl, enthaltend 12 % bis 18 % Chrom, ausgebildet. Ist in der zweiten intermediären Schicht ein Metalldraht enthalten, ist es von Vorteil, wenn das Metalldrahtmaterial der äußeren Schutzschicht 6 aus einem Metall besteht, welches in der elektrochemischen Spannungsreihe nahe bei dem für die zweite Schutzschicht 5 gewählten Metall liegt, sodass unter Feuchtigkeitseinwirkung eine elektrochemische Zersetzung der Metallgestricke vermieden wird. Hierfür kann es ausreichend sein, dass das Metalldrahtgestrick der äußeren Schicht 5 ausreichend passiviert ist. Die Metalldrahtfilamente der äußeren Schicht 5 besitzen einen Durchmesser von vorzugsweise 0,08 mm bis 0,2 mm und insbesondere von 0,11 mm bis 0,15 mm. Die Aramidfasern - sofern verwendet - entsprechen beispielsweise einer Spezifikation Dtex 1610.

Die Maschenweite und die Maschenhöhe der äußeren Schutzschicht 5 können denen der Schutzschicht 4 gleich sein, sie sind jedoch zweckmäßigerweise etwas größer oder kleiner, damit die Schutzschicht 5 sicher außerhalb der Schutzschicht 4 liegt und sich die Maschen der Schichten 4, 5 möglichst nicht ineinanderlegen können. Dies gewährleistet, dass Maschen der Schutzschicht 5 sicher nicht mit einem Scheuerpartnerteil in Berührung kommen und somit nicht zerstört werden.

Auf diese dritte Schutzschicht wird mit den vorgenannten Imprägnierungsmitteln imprägniert, wobei entweder zunächst die erste Schutzschicht 3 hergestellt und dann imprägniert wird, dann die zweite Schicht darum aufgebracht wird und anschließend imprägniert wird und dann die dritte Schicht aufgebracht und imprägniert wird oder zunächst die erste Schicht fertiggestellt wird und dann die zweite Schicht darum herum angebracht wird, diese dann gemeinsam imprägniert werden, dann die dritte Schutzschicht aufgebracht wird und anschließend eine Abschlussimprägnierung stattfindet. Es wurde herausgefunden, dass nur die Kombination aus einer ersten kreuzgeflochtenen Schicht aus Aramid und Glasseide mit einer darum angeordneten zweiten gestrickten Schicht sowohl eine gute Wärmeableitung als auch einen guten Scherschutz ergibt.

Die äußerste Schutzschicht, welche als Edelstahlgestrick das Gestrick der zweiten Schutzschicht 4 umgibt, ist gegenüber mechanischen Einflüssen, z. B. Scheuern, widerstandsfähiger als ein aus einem Leichtmetall, z. B. Aluminium allein ausgebildetes Gestrick. Durch die Ummantelung der innersten Schutzschicht 3 durch zwei Metallgestricke wird ein zweilagiges Maschenpolster gebildet, welches im Falle einer scheuernden oder schlagenden Belastung sowohl in radialer als auch in axialer Umfangsrichtung federnd nachgeben kann und somit durch elastische Verformung der Maschen eine scheuernde Bewegung der erfindungsgemäßen Schutzvorrichtung an einem benachbarten Bauteil innerhalb des Maschenholzes abgebaut wird. Hierbei ist besonders von Vorteil, dass die Kombination der inneren Schicht 3 und der intermediären Schicht 4 zudem eine vormals nicht erzielte unbekannte starke Wirkung gegen auftretende Scherungen oder Quetschungen ergibt, wobei gleichzeitig das Vorsehen einer dritten Schicht aus einem Metallgestrick oder aus einem Metall- und Aramidgestrick die Eigenschaften der ersten Schutzschicht 3 und der intermediären Schutzschicht 4 auch dann sichert, wenn punktuell oder flächig hohe Temperaturbelastungen auftreten. Beispielsweise werden Batterieflusskabel heute zwangsweise an Hochtemperatur-belasteten Bausteinen wie Turboladern oder Abgasrohren vorbeigeführt, wobei in einem Deformationsfall das Kabel auch gegen diese heißen Bauteile gequetscht wird oder an ihnen geschert wird. Selbst bei diesen außerordentlich hohen Belastungen hält der erfindungsgemäße Schlauch stand.

Selbstverständlich liegt es auch im Bereich der Erfindung, den vorbeschriebenen Grundaufbau einer erfindungsgemäßen Schutzvorrichtung 1 mehrfach aufeinanderfolgend auszubilden, sodass eine erhöhte Schutzwirkung sowohl gegen Scherung/Quetschung als auch gegen Wärmebeaufischlagung erzielt wird.

Die erfindungsgemäß in den unterschiedlichen Schichten verwendeten Metalldrahtfilamente können aus den verschiedensten Metallen oder Legierungen ausgebildet sein. Zudem kann ein Metalldraht-Multifilament auch aus Einzelfäden oder Filamenten aus unterschiedlichen Metallen oder Legierungen ausgebildet sein. Die Einzelfilamente und/oder Metalldrahtmono-oder Multifilamente können passiviert oder gegeneinander isoliert ausgebildet sein. Vorzugsweise sind Sie aus Monel (NiCu30Fe) und/oder Edelstahl ausgebildet. Geeignet sind auch Metalldrahtfilamente die gemäß der US-Norm ASTM-B-520-93 (1998) aus einem so genannten SCF-Werkstoff ausgebildet sein. Derartige Schichtmetalldrahtfilamente finden bestimmungsgemäß in der Elektrotechnik, dort insbesondere zur Lösung von Problemstellungen auf dem Gebiet der elektrischen bzw. elektromagnetischen Abschirmung, Anwendung. Beispielsweise besteht ein solcher Schichtdraht, auch SCF-Draht genannt, aus 64 % Stahl (Kern), aus 34 % Kupfer (Zwischenmantel) und aus 2 % Zinn (äußerste Schicht). Weitere Drahtausführungsformen, welche für die Erfindung nutzbar sind, sind in der oben genannten Norm angegeben. Die Verstrickungsarten nach der Erfindung können sowohl einfädig eingängig als auch zweifädig oder zweigängig ausgebildet sein, ferner kann das Gestrick sowohl als glattes Gestrick als auch als Gestrick mit Schräg- oder Pfeilwellung ausgebildet sein.

Bei der erfindungsgemäßen Ausbildung von Schutzvorrichtungen ist von Vorteil, dass bei einer hinreichend guten Wärmebeständigkeit bzw. Wärmeabschirmung eines zu schützenden Körpers eine herausragende Widerstandsfähigkeit gegen Quetschung und/oder Scherung erzielt wird, sodass hierdurch geschützte Bauteile eine sehr hohe Crash- bzw. Unfallsicherheit bei hohen Deformationskräften aufweist.

## Patentansprüche

1. Schutzvorrichtung für längliche Körper, insbesondere für Kabelbäume, Kabel, Treibstoff-, Hydraulik-, Pneumatik- oder andere Leitungen mit einer ersten inneren Schutzschicht (3), einer diese erste Schutzschicht (3) umgebenden zweiten intermediären Schutzschicht (4) und einer äußeren Schutzschicht (5), wobei die erste Schutzschicht (3) ein kreuzgeflochtener Schlauch aus Glasseidenfäden bzw. - fasern (6) und Aramidfäden bzw. -fasern (7) ist und die intermediäre Schutzschicht (4) ein Gestrick aus Aramidfasern (7) - oder Aramid- und Metallfasern ist und die äußere Schutzschicht (5) ein Gestrick aus Metallfasern oder Metallfasern und Aramidfasern (7) ist.

2. Schutzvorrichtung nach Anspruch 1, **dadurch gekennzeichnet, dass** die Glasseidenfäden (6) Mono- oder Multifilamente sind, wobei Multifilamente aus einer Mehrzahl von Glasfilamenten ausgebildet werden und die Aramidfäden (7) Mono-oder Multifilamente sind, wobei Multifilamente aus einer Mehrzahl von Aramidfilamenten bestehen und die Metalldrahtfasern Mono- oder Multifilamente sind.

3. Schutzvorrichtung nach Anspruch 1 oder 2, **dadurch gekennzeichnet, dass** die Aramidfäden (7) Multifilamente sind, die aus miteinander niedrig verzwirnten Aramidfilamenten ausgebildet sind und die Glasseidenfäden (6) Multifilamente sind, wobei die Glasseidenfäden (6) aus Glasfilamenten mit einer relativ niedrigen Wärmeleitfähigkeit λ, von etwa 0,8 bis 1,2 W/mK, insbesondere 1,0 W/mK ausgebildet sind.

4. Schutzvorrichtung nach einem der vorhergehenden Ansprüche, **dadurch gekennzeichnet, dass** die Glasfilamente aus einem E-Glas, aus einem D-Glas, einem R-Glas oder einem A-R-Glas bestehen und die Aramidfäden (7) aus einer Vielzahl von Aramidfilamenten bestehen, welche, ein Multifilament bildend, zu dem Faden (7) miteinander verzwirnt sind.

5. Schutzvorrichtung nach einem der vorhergehenden Ansprüche, **dadurch gekennzeichnet, dass** die Glasseidenfäden (6) einer Spezifikation 68 Dtex 2 entsprechen.

6. Schutzvorrichtung nach einem der vorhergehenden Ansprüche, **dadurch gekennzeichnet, dass** die Aramidfilamente einer Spezifikation 1610 Dtex entsprechen.

7. Schutzvorrichtung nach einem der vorhergehenden Ansprüche, **dadurch gekennzeichnet, dass** die Zugfestigkeit der Glasfäden (6) zwischen etwa 2500 MPa und 3400 MPa liegt und die Glasseide aus den Glasfäden (6) feuerbeständig und unbrennbar ist.

8. Schutzvorrichtung nach einem der vorhergehenden Ansprüche, **dadurch gekennzeichnet, dass** der Aramid-Anteil in der ersten kreuz-co-geflochtenen Schicht (3) zwischen 10 und 50 %, vorzugsweise zwischen 20 bis 40 % und am meisten bevorzugt bei 30 % liegt.

9. Schutzvorrichtung nach einem der vorhergehenden Ansprüche, **dadurch gekennzeichnet, dass** die Co-Kreuzflechtung und eine anschließende Imprägnierung und Verrundung des gebildeten Schlauchs derart durchgeführt wird, dass die ursprünglich runden Aramidfäden einen radial abgeflachten Querschnitt besitzen.

10. Schutzvorrichtung nach einem der vorhergehenden Ansprüche, **dadurch gekennzeichnet, dass** die erste innere Schicht (3) imprägniert oder gelackt ist und hierdurch zwischen den Filamenten bzw. den Fäden ein mechanischer Verbund ausgebildet wird und somit der gebildete Schlauch eine dauerhafte, im Querschnitt rundliche Raumform erhält und diese bei der weiteren Be- oder Verarbeitung beibehält.

11. Schutzvorrichtung nach einem der vorhergehenden Ansprüche, **dadurch gekennzeichnet, dass** die Imprägnierung eine Imprägnierung auf Basis von PTFE, Silikon oder Silikonharz oder Polyurethan ist.

12. Schutzvorrichtung nach einem der vorhergehenden Ansprüche, **dadurch gekennzeichnet, dass** zur UV-Stabilisierung der Aramidfasern eine Imprägnierung aus Silikonharz vorhanden ist.

13. Schutzvorrichtung nach einem der vorhergehenden Ansprüche, **dadurch gekennzeichnet, dass** die zweite Schutzschicht (4) als Gestrickschicht aus gestrickten Filamenten ausgebildet ist, wobei das Gestrick entweder aus Aramidfäden (7) oder Aramidfäden (7) und Metalldrahtfilamenten besteht.

14. Schutzvorrichtung nach einem der vorhergehenden Ansprüche, **dadurch gekennzeichnet, dass** die Metalldrahtfasern aus Edelstahl und/oder Monel (NiCu30Fe) und /oder aus Aluminium und/oder Kupfer und/oder Kupferlegierungen wie Messing, Tombak und dergleichen und/oder einem SCF-Werkstoff gemäß der US-Norm ASTM-B-520-93 (1998) ausgebildet sind.

15. Schutzvorrichtung nach einem der vorhergehenden Ansprüche, **dadurch gekennzeichnet, dass** die Metalldrahtfasern einen Durchmesser von 0,08 mm bis 0,2 mm und bevorzugt einen Durchmesser von 0,11 mm bis 0,15 mm besitzen.

16. Schutzvorrichtung nach einem der vorhergehenden Ansprüche, **dadurch gekennzeichnet, dass** die Metalldrahtfasern der zweiten Schicht (4) aus Aluminium und/oder Kupfer und/oder Kupferlegierungen wie Messing, Tombak und dergleichen ausgebildet sind.

17. Schutzvorrichtung nach einem der vorhergehenden Ansprüche, **dadurch gekennzeichnet, dass** der oder die Aramidfäden (7) und die Metalldrahtfaser(n) mittels eines Rundstrickverfahrens eingängig spiralförmig umlaufend oder zweigängig spiralförmig rund verstrickt sind, so dass Maschen ausgebildet werden.

18. Schutzvorrichtung nach einem der vorhergehenden Ansprüche, **dadurch gekennzeichnet, dass** die zweite Schutzschicht (4) mit einer Imprägnierung versehen ist, wobei die Imprägnierung eine Imprägnierung auf Basis von PTFE, Silikon oder Silikonharz oder Polyurethan, vorzugsweise mit einer Silikonharz-Imprägnierung ist.

19. Schutzvorrichtung nach einem der vorhergehenden Ansprüche, **dadurch gekennzeichnet, dass**, die zweite intermediäre Schutzschicht (4) anliegend umgebend, die dritte Schutzschicht (5) ausgebildet ist, welche ebenfalls als Gestrick ausgebildet ist, wobei das Gestrick der äußeren Schicht (5) ein Metalldrahtgestrick oder ein Co-Gestrick aus Metalldrahtfasern und Aramidfäden (7) ist.

20. Schutzvorrichtung nach einem der vorhergehenden Ansprüche, **dadurch gekennzeichnet, dass** wenn die zweite Schicht (4) ausschließlich aus einem Aramidfasergestrick besteht, die äußere Schicht (5) aus einem Co-Gestrick aus Metalldrahtfasern und Aramidfasern (7) ausgebildet ist und wenn die zweite intermediäre Schicht (4) aus einem Co-Gestrick aus Metalldrahtfasern und Aramidfasern (7) besteht, die dritte äußere Schicht (5) im wesentlichen aus Metalldrahtfaser ausgebildet ist.

21. Schutzvorrichtung nach einem der vorhergehenden Ansprüche, **dadurch gekennzeichnet, dass** die das Gestrick bildende Metalldrahtfaser der äußeren Schicht (5) aus Monel (NiCu30Fe) und/oder einem Edelstahl, insbesondere einem Edelstahl, enthaltend 12 % bis 18 % Chrom, ausgebildet wird.

22. Schutzvorrichtung nach einem der vorhergehenden Ansprüche, **dadurch gekennzeichnet, dass** wenn in der zweiten intermediären Schicht (4) Metalldrahtfaser(n) enthalten ist/sind, die Metalldrahtfaser(n) der äußeren Schutzschicht (5) aus einem Metall oder einer Legierung bestehen, welches in der elektrochemischen Spannungsreihe nahe bei dem für die zweite Schutzschicht (4) gewählten Metall oder Legierung liegt, so dass unter Feuchtigkeitseinwirkung eine elektrochemische Zersetzung der Metalldrahtgestricke vermieden wird, und/oder die Metalldrahtfasern passiviert und/oder isoliert sind um eine Korrosion zu vermeiden.

23. Schutzvorrichtung nach einem der vorhergehenden Ansprüche, **dadurch gekennzeichnet, dass** die Maschenweite und die Maschenhöhe der äußeren Schutzschicht (5) gegenüber denen der intermediären Schutzschicht (4) größer oder kleiner sind, damit die äußere Schutzschicht (5) sicher außerhalb der intermediären Schutzschicht (4) liegt und sich die Maschen der Schichten (4), (5) möglichst nicht ineinander legen.

24. Schutzvorrichtung nach einem der vorhergehenden Ansprüche, **dadurch gekennzeichnet, dass** die Verstrickungsarten einfädig eingängig und/oder zweifädig oder zweigängig ausgebildet sind, wobei das Gestrick sowohl als glattes Gestrick als auch als Gestrick mit Schräg- oder Pfeilwellung ausgebildet ist.

## Claims

1. Protective device for oblong bodies, in particular for cable harnesses, cables, fuel lines, hydraulic lines, pneumatic lines or other lines, comprising a first, inner protective layer (3), a second, intermediate protective layer (4) which surrounds this first protective layer (3), and an outer protective layer (5), wherein the first protective layer (3) is a cross-braided tube made of filament glass threads or fibres (6) and aramid threads or fibres (7), and the intermediate protective layer (4) is a knit made of aramid fibres (7) or aramid and metal fibres, and the outer protective layer (5) is a knit made of metal fibres or metal fibres and aramid fibres (7).

2. Protective device according to Claim 1, **characterized in that** the filament glass threads (6) are monofilaments or multifilaments, wherein multifilaments are formed from a plurality of glass filaments, and the aramid threads (7) are monofilaments or multifilaments, wherein multifilaments are formed from a plurality of aramid filaments, and the metal fibres are monofilaments or multifilaments.

3. Protective device according to Claim 1 or 2, **characterized in that** the aramid threads (7) are multifilaments which are formed from aramid filaments that are low-twisted with one other, and the filament glass threads (6) are multifilaments, wherein the filament glass threads (6) are formed from glass filaments having a relatively low heat conductivity λ of approximately 0.8 to 1.2 W/mK, in particular 1.0 W/mK.

4. Protective device according to any of the preceding Claims, **characterized in that** the glass filaments are made from an E-glass, from a D-glass, from an R-glass or from an AR-glass, and the aramid threads (7) are formed from a plurality of aramid filaments which are twisted together to the threads (7) to form a multifilament.

5. Protective device according to any of the preceding Claims, **characterized in that** the filament glass threads (6) meet a specification of 68 Dtex 2.

6. Protective device according to any of the preceding Claims, **characterized in that** the aramid filaments meet a specification of 1610 Dtex.

7. Protective device according to any of the preceding Claims, **characterized in that** the tensile strength of the glass threads (6) lies between approximately 2500 MPa and 3400 MPa, and the filament glass of the glass threads (6) is fire-resistant and incombustible.

8. Protective device according to any of the preceding Claims, **characterized in that** the aramid proportion in the first cross-braided layer (3) is between 10 and 50%, preferably between 20 and 40% and usually preferably 30%.

9. Protective device according to any of the preceding Claims, **characterized in that** the cross-braiding and a subsequent impregnation and rounding of the formed tube is carried out in such a way that the originally round aramid threads have a radially flattened cross-section.

10. Protective device according to any of the preceding Claims, **characterized in that** the first, inner layer (3) is impregnated or lacquered, and as a result a mechanical bond is formed between the filaments or threads, and thus the formed tube is provided with a permanent spatial shape that is round in cross section and retains said shape during further processing.

11. Protective device according to any of the preceding Claims, **characterized in that** the impregnation is an impregnation based on PTFE, silicone or silicone resin, or polyurethane.

12. Protective device according to any of the preceding Claims, **characterized in that** an impregnation of silicone resin is provided for UV stabilization of the aramid fibres.

13. Protective device according to any of the preceding Claims, **characterized in that** the second protective layer (4) is formed as a knit layer of knitted filaments, wherein the knit consists either of aramid threads (7) or aramid threads (7) and metal filaments.

14. Protective device according to any of the preceding Claims, **characterized in that** the metal fibres are formed from stainless steel and/or monel (NiCu30Fe) and/or from aluminium and/or copper and/or copper alloys such as brass, tombak and the like and/or an SCF material in accordance with US Standard ASTM-B-520-93 (1998).

15. Protective device according to any of the preceding Claims, **characterized in that** the metal fibres have a diameter of 0.08 mm to 0.2 mm, and preferably a diameter of 0.11 mm to 0.15 mm.

16. Protective device according to any of the preceding Claims, **characterized in that** the metal fibres of the second layer (4) are formed from aluminium and/or copper and/or copper alloys such as brass, tombak and the like.

17. Protective device according to any of the preceding Claims, **characterized in that** the aramid thread or threads (7) and the metal fibre or fibres are knitted by a circular knitting process circulating in a single-flight spiral shape or a double-flight spiral shape, in such a way that loops are formed.

18. Protective device according to any of the preceding Claims, **characterized in that** the second protective layer (4) is provided with an impregnation, wherein the impregnation is an impregnation based on PTFE, silicone or silicone resin, or polyurethane, preferably with a silicone resin impregnation.

19. Protective device according to any of the preceding Claims, **characterized in that** the third protective layer (5) is designed to bear against and surround the second, intermediate protective layer (4), said third protective layer likewise being formed as a knit, wherein the knit of the outer layer (5) is a metal knit or a combination knit composed of metal fibres and aramid fibres (7).

20. Protective device according to any of the preceding Claims, **characterized in that**, when the second layer (4) consists exclusively of an aramid fibre knit, the outer layer (5) is formed as a combination knit composed of metal fibres and aramid fibres (7), and when the second, intermediate layer (4) consists of a combination knit composed of metal fibres and aramid fibres (7) the third, outer layer (5) is formed essentially of metal fibres.

21. Protective device according to any of the preceding Claims, **characterized in that** the metal fibres forming the knit of the outer layer (5) are formed from monel (NiCu30Fe) and/or a stainless steel, in particular a stainless steel comprising 12% to 18% chromium.

22. Protective device according to any of the preceding Claims, **characterized in that**, when metal fibres are contained in the second, intermediate layer (4), the metal fibres of the outer protective layer (5) consist of a metal or an alloy which, in the electrochemical series, is located close to the metal selected for the second protective layer (4), so that, under the effect of moisture, electrochemical decomposition of the metal knits is prevented and/or the metal fibres are passivated and/or insulated in order to prevent corrosion.

23. Protective device according to any of the preceding Claims, **characterized in that** the loop width and the loop height of the outer protective layer (5) are greater or smaller than those of the intermediate protective layer (4), so that the outer protective layer (5) securely lies outside the intermediate protective layer (4) and the loops of the layers (4), (5) as far as possible do not lie inside one another.

24. Protective device according to any of the preceding Claims, **characterized in that** the knitting types are designed to be single-thread, single-flight and/or double-thread or double-flight, wherein the knit is designed both as a smooth knit and as a knit with oblique or arrow-shaped corrugations.

## Revendications

1. Dispositif de protection pour corps allongés, en particulier pour faisceaux de câble, câbles, conduites de carburant, conduites hydrauliques, conduites pneumatiques ou autres conduites comprenant une première couche de protection (3) intérieure, une seconde couche de protection (4) intermédiaire entourant cette première couche de protection (3) et une couche de protection (5) extérieure, la première couche de protection (3) étant un flexible tressé en croix à base de fils de soie de verre ou de fibres de soie de verre (6) et de fils d'aramide ou de fibres d'aramide (7) et la couche de protection (4) intermédiaire étant un tricotage à base de fibres d'aramide (7) ou de fibres d'aramide et de fibres de métal et la couche de protection (5) extérieure étant un tricotage à base de fibres de métal ou de fibres de métal et de fibres d'aramide (7).

2. Dispositif de protection selon la revendication 1, **caractérisé en ce que** les fils de soie de verre (6) sont des monofilaments ou des multifilaments, les multifilaments étant réalisés à base d'une pluralité de filaments de verre et les fils d'aramide (7) étant des monofilaments ou des multifilaments, les multifilaments étant à base d'une pluralité de filaments d'aramide et les fibres de fil de métal étant des monofilaments ou des multifilaments.

3. Dispositif de protection selon la revendication 1 ou 2, **caractérisé en ce que** les fils d'aramide (7) sont des multifilaments, qui sont réalisés à base de filaments d'aramide faiblement retordus les uns avec les autres et les fils de soie de verre (6) étant des multifilaments, les fils de soie de verre (6) étant réalisés à base de filaments de verre avec une conductibilité thermique λ relativement faible d'environ 0,8 à 1,2 W/mK, en particulier 1,0 W/mK.

4. Dispositif de protection selon l'une quelconque des revendications précédentes, **caractérisé en ce que** les filaments de verre sont à base d'un verre E, à base d'un verre D, à base d'un verre R ou d'un verre A-R et les fils d'aramide (7) étant constitués d'une pluralité de filaments d'aramide, qui, en formant un multifilament, sont retordus les uns avec les autres pour former le fil (7).

5. Dispositif de protection selon l'une quelconque des revendications précédentes, **caractérisé en ce que** les fils de soie de verre (6) répondent à une spécification 68 Dtex 2.

6. Dispositif de protection selon l'une quelconque des revendications précédentes, **caractérisé en ce que** les filaments d'aramide répondent à une spécification 1610 Dtex.

7. Dispositif de protection selon l'une quelconque des revendications précédentes, **caractérisé en ce que** la résistance à la traction des fils de verre (6) est située entre 2500 MPa et 3400 MPa et la soie de verre à base des fils de verre (6) est résistante au feu et non-combustible.

8. Dispositif de protection selon l'une quelconque des revendications précédentes, **caractérisé en ce que** la part d'aramide dans la première couche (3) co-tressée en croix si situe entre 10 et 50 %, de préférence entre 20 à 40 % et généralement de préférence aux environs de 30 %.

9. Dispositif de protection selon l'une quelconque des revendications précédentes, **caractérisé en ce que** le co-tressage en croix et une imprégnation consécutive et un arrondissage du flexible formé sont réalisés de telle sorte que les fils d'aramide ronds à l'origine présentent une section aplatie radialement.

10. Dispositif de protection selon l'une quelconque des revendications précédentes, **caractérisé en ce que** la première couche (3) intérieure est imprégnée ou laquée et de ce fait un composite mécanique est réalisé entre les filaments et les fils et ainsi le flexible formé présente une forme d'espace permanente et arrondie en section et conserve cette forme lors du traitement ultérieur.

11. Dispositif de protection selon l'une quelconque des revendications précédentes, **caractérisé en ce que** l'imprégnation est une imprégnation à base de polytétrafluoréthylène, de silicone ou de résine de silicone ou de polyuréthane.

12. Dispositif de protection selon l'une quelconque des revendications précédentes, **caractérisé en ce qu'**on a une imprégnation à base de résine de silicone pour la stabilisation aux UV des fibres d'aramide.

13. Dispositif de protection selon l'une quelconque des revendications précédentes, **caractérisé en ce que** la seconde couche de protection (4) est réalisée sous la forme d'une couche de tricotage à base de filament tricoté, le tricotage étant constitué soit de fils d'aramide (7) soit de fils d'aramide (7) et de filaments de fil métallique.

14. Dispositif de protection selon l'une quelconque des revendications précédentes, **caractérisé en ce que** les fibres de fil métallique sont réalisées à base d'acier fin et/ou de Monel (NiCu30Fe) et/ou d'aluminium et/ou de cuivre et/ou d'alliages de cuivre comme le laiton, le Tombak et similaire et/ou un matériau SCF selon la norme américaine ASTM-B-520-93 (1998).

15. Dispositif de protection selon l'une quelconque des revendications précédentes, **caractérisé en ce que** les fibres de fil métallique ont un diamètre de 0,08 mm à 0,2 mm et de préférence un diamètre de 0,11 mm à 0,15 mm.

16. Dispositif de protection selon l'une quelconque des revendications précédentes, **caractérisé en ce que** les fibres de fil métallique de la seconde couche (4) sont réalisées à base d'aluminium et/ou de cuivre et/ou d'alliages de cuivre comme le laiton, le Tombak et similaires.

17. Dispositif de protection selon l'une quelconque des revendications précédentes, **caractérisé en ce que** le ou les fils d'aramide (7) et la (les) fibre(s) de fil métallique sont tricotés au moyen d'un procédé de tricotage circulaire en tournant en forme de spirale sur un pas simple ou en forme de spirale sur deux pas, de sorte que des mailles sont réalisées.

18. Dispositif de protection selon l'une quelconque des revendications précédentes, **caractérisé en ce que** la seconde couche de protection (4) est dotée d'une imprégnation, l'imprégnation étant une imprégnation à base de polytétrafluoréthylène, de silicone ou de résine de silicone ou de polyuréthane, de préférence avec une imprégnation de résine de silicone.

19. Dispositif de protection selon l'une quelconque des revendications précédentes, **caractérisé en ce que** la troisième couche de protection (5) est réalisée en entourant par application la seconde couche de protection (4) intermédiaire, et est réalisée également sous la forme de tricotage, le tricotage de la couche (5) extérieure étant un tricotage de fil métallique ou un co-tricotage à base de fibres de fil métallique et de fils d'aramide (7).

20. Dispositif de protection selon l'une quelconque des revendications précédentes, **caractérisé en ce que**, lorsque la seconde couche (4) est exclusivement réalisé à base d'un tricotage de fibre d'aramide, la couche (5) extérieure est réalisée à base d'un co-tricotage de fibres de fil métallique et de fibres d'aramide (7) et lorsque la seconde couche (4) intermédiaire est constituée d'un co-tricotage à base de fibres de fil métallique et de fibres d'aramide (7), la troisième couche (5) extérieure est réalisée sensiblement à base de fibre de fil métallique.

21. Dispositif de protection selon l'une quelconque des revendications précédentes, **caractérisé en ce que** la fibre de fil métallique, formant le tricotage, de la couche (5) extérieure est réalisée à base de Monel (NiCu30Fe) et/ou d'un acier fin, en particulier d'un acier fin contenant 12 % à 18 % de chrome.

22. Dispositif de protection selon l'une quelconque des revendications précédentes, **caractérisé en ce que**, lorsque de la(des) fibre(s) de fil métallique est(sont) contenue(s) dans la seconde couche (4) intermédiaire, la(les) fibre(s) de fil métallique de la couche de protection (5) extérieure sont à base d'un métal ou d'un alliage qui repose dans la série de tension électrochimique à proximité du métal choisi pour la seconde couche de protection (4) ou de l'alliage, de sorte que, sous l'effet de l'humidité, on évite une décomposition électrochimique des tricotages de fil métallique, et/ou les fibres de fil métallique sont passivées et/ou isolées afin d'éviter une corrosion.

23. Dispositif de protection selon l'une quelconque des revendications précédentes, **caractérisé en ce que** la largeur de maille et la hauteur de maille de la couche de protection (5) extérieure sont plus grandes ou plus petites par rapport à celles de la couche de protection (4) intermédiaire, pour que la couche de protection (5) extérieure se repose en toute sécurité à l'extérieur de la couche de protection (4) intermédiaire et que les mailles des couches (4), (5), ne soient pas les unes dans les autres dans la mesure du possible.

24. Dispositif de protection selon l'une quelconque des revendications précédentes, **caractérisé en ce que** les types de tricotage sont réalisés avec un fil sur un pas et/ou avec deux fils ou sur deux pas, le tricotage étant réalisé aussi bien sous la forme d'un tricotage lisse que sous la forme d'un tricotage avec une ondulation oblique ou une ondulation en forme de flèche.
